# EUROPÄISCHE PATENTANMELDUNG

(11) **EP 2 033 820 A1**
(43) Veröffentlichungstag der Anmeldung: **11.03.2009**
(21) Anmeldenummer: 08010668.5
(22) Anmeldetag: 12.06.2008
(51) Int. Cl.: B60G 21/05, B60G 3/26, B60G 7/00

(54) **Verbundlenkerhinterachse eines Fahrzeugs**

(30) Priorität: 10.09.2007 DE 102007043121
(71) Anmelder: GM Global Technology Operations, Inc., Detroit, MI 48265-3000 (US)
(72) Erfinder: Bitz, Gerd, 55126 Mainz (DE); Siebeneick, Jürgen, 55430 Oberwesel (DE); Döhrer, Eckhardt, 76835 Flemingen (DE)
(74) Vertreter: Strauss, Peter

(57) **Zusammenfassung**

Die Erfindung betrifft eine Verbundlenkerhinterachse (1) eines Fahrzeugs, insbesondere Kraftfahrzeugs, mit zwei starren Längslenkern (2), die jeweils mit ihrem einen Ende schwenkbar an einer Fahrzeugkarosserie gelagert sind und an deren anderem Ende jeweils ein Radträger (7) zur drehbaren Lagerung eines Fahrzeugrads (8) um seine Radmittenachse (10) angebracht ist, sowie mit einer die beiden Längslenker (2) miteinander verbindenden torsionsweichen Querstrebe (3). Sie zeichnet sich dadurch aus, dass jeder Radträger (7) mittels wenigstens dreier elastischer Radträgerlager (11, 12, 13) am Längslenker (2) angebracht ist, wobei, in Vorwärtsfahrtrichtung des Fahrzeugs betrachtet, wenigstens zwei Radträgerlager (11, 12) hinter der Radmittenachse (10) und wenigstens ein Radträgerlager (13) vor der Radmittenachse (10) angeordnet sind, derart, dass durch die beiden hinter der Radmittenachse (10) angeordneten Radträgerlager (11, 12) eine Schwenkachse (14) zum Verschwenken des Radträgers (7) relativ zum Längslenker (2) vorgegeben ist.

## Beschreibung

### Gebiet der Erfindung

Die vorliegende Erfindung liegt auf dem Gebiet der Fahrwerkstechnik und betrifft nach ihrer Gattung eine Verbundlenkerhinterachse eines Fahrzeugs, insbesondere Kraftfahrzeugs.

### Stand der Technik

Verbundlenkerhinterachsen als solche sind den Fachleuten auf dem Gebiet der Fahrwerkstechnik hinlänglich bekannt. So werden Verbundlenkerhinterachsen in modernen Kraftfahrzeugen, beispielsweise in den Modellen "Opel Corsa" und "Opel Astra" der Anmelderin, serienmäßig eingesetzt. In der Patentliteratur sind gattungsgemäße Verbundlenkerhinterachsen beispielsweise in dem europäischen Patent EP 0 681 932 B2 und der deutschen Offenlegungsschrift DE 10 2004 032 08 A1 der Anmelderin beschrieben.

Eine solche Verbundlenkerhinterachse umfasst zwei starre Längslenker, die jeweils an ihrem vorderen Ende um eine quer zur Fahrzeuglängsrichtung angeordnete Schwenkachse schwenkbar an der Fahrzeugkarosserie bzw. einem Fahrschemel angebracht und an deren hinterem Ende jeweils mit einem Radträger zur drehbaren Lagerung eines Fahrzeugrads versehen sind. Zudem sind die beiden Längslenker durch eine biegesteife, jedoch torsionsweiche Querstrebe miteinander verbunden, die vor einer gedachten Verbindungslinie der Radmittenachsen der beiden Fahrzeugräder angeordnet ist. Die torsionsweiche Querstrebe ("Verbundlenker") wirkt als Stabilisator, wodurch bei einer Kurvenfahrt, wenn das kurveninnere Rad ausfedert und das kurvenäußere Rad einfedert, das Kurvenverhalten des Fahrzeugs erheblich verbessert werden kann.

Die Verbundlenkerhinterachse muss, neben dem Fahrzeuggewicht, auch alle Kräfte aufnehmen, die während einer Beschleunigung oder Verzögerung des Fahrzeugs an den Rädern angreifen. So treten insbesondere bei einer Kurvenfahrt an den Radaufstandslinien der Räder Seitenkräfte auf, durch welche die Längslenker konstruktionsbedingt um deren vordere Lagerstellen an der Fahrzeugkarosserie verschwenkt werden. Verbundlenkerhinterachsen neigen aus diesem Grund zu einer Übersteuerungsbewegung bei Kurvenfahrt ("Seitenkraftübersteuern"), welches in unerwünschter Weise zur Folge haben kann, dass das Fahrzeugheck bei Kurvenfahrt leichter ausbricht.

Um das Problem des Seitenkraftübersteuerns bei Verbundlenkerhinterachsen zu lösen, wurde bereits eine aktive Verstellung der Radträger mithilfe eines Aktuators in Betracht gezogen. Eine solche aktive Verstellung der Radträger ist jedoch nur mit einem relativ hohen technischen Aufwand zu bewerkstelligen, da an den Radträgern jeweils zwei Lagerstellen vorzusehen sind, durch welche ein rotatorischer Freiheitsgrad bereit gestellt wird.

Eine technisch einfachere Lösung ist in der deutschen Offenlegungsschrift DE 10 2004 032 08 A1 der Anmelderin beschrieben. Dort wird die Verbundlenkerhinterachse nicht am Fahrzeugunterbau, sondern an einem zusätzlichen Fahrschemel montiert, der sich seinerseits mittels eines Fahrschemellagers am Unterbau des Kraftfahrzeugs abstützt. Über den durch das Fahrschemellager definierten zusätzlichen Bewegungspol lässt sich das Seitenkraftverhalten der Verbundlenkerhinterachse gezielt beeinflussen. Obgleich durch diese Maßnahme eine befriedigende Lösung des Problems erreicht werden kann, ist es erforderlich, einen zusätzlichen Fahrschemel zur Lagerung der Verbundlenkerhinterachse vorzusehen, was, abhängig vom Fahrzeugtyp, nicht immer erwünscht ist.

### Aufgabenstellung

Demgegenüber besteht die Aufgabe der vorliegenden Erfindung darin, eine technisch einfach zu realisierende Verbundlenkerhinterachse eines Fahrzeugs zur Verfügung zu stellen, durch welche dem bei Kurvenfahrt auftretenden Seitenkraftübersteuern entgegengewirkt werden kann.

### Lösung der Aufgabe

Diese Aufgabe wird nach dem Vorschlag der Erfindung durch eine Verbundlenkerhinterachse mit den Merkmalen des unabhängigen Anspruchs gelöst. Vorteilhafte Ausgestaltungen der Erfindung sind durch die Merkmale der Unteransprüche angegeben.

Erfindungsgemäß ist eine Verbundlenkerhinterachse eines Fahrzeugs, insbesondere Kraftfahrzeugs, gezeigt, die mit zwei im Wesentlichen in Fahrzeuglängsrichtung sich erstreckenden starren Längslenkern versehen ist, die jeweils mit ihrem einen (beispielsweise in Vorwärtsfahrtrichtung vorderen) Ende (insbesondere um eine quer zur Fahrzeuglängsrichtung angeordnete Schwenkachse) schwenkbar an einer Fahrzeugkarosserie bzw. einem an der Fahrzeugkarosserie angebrachten Fahrschemel gelagert sind. An deren anderem (beispielsweise in Vorwärtsfahrtrichtung hinteren) Ende sind die Längslenker jeweils mit einem Radlager zur drehbaren Lagerung eines Fahrzeugrads um seine Radmittenachse versehen. Weiterhin sind die beiden Längslenker durch eine biegefeste, jedoch torsionsweiche, im Wesentlichen in Fahrzeugquerrichtung sich erstreckende Querstrebe miteinander verbunden, welche als Stabilisator wirkt.

Die erfindungsgemäße Verbundlenkerhinterachse zeichnet sich in wesentlicher Weise dadurch aus, dass jeder Radträger mittels wenigstens dreier elastischer Radträgerlager, die beispielsweise in Form elastischer Dämpfungsbuchsen ausgebildet sind, am zugehörigen Längslenker angebracht ist. Hierbei sind, in normaler Vorwärtsfahrtrichtung des Fahrzeugs betrachtet, wenigstens zwei der elastischen Radträgerlager hinter der Radmittenachse (um welche das Rad drehbar ist) des zugehörigen Rads angeordnet und wenigstens ein elastisches Radträgerlager vor der Radmittenachse angeordnet, wobei durch die die beiden hinter der Radmittenachse angeordneten Radträgerlager eine Schwenkachse zum Verschwenken des Radträgers relativ zum Längslenker vorgegeben (definiert) ist.

Durch die elastisch verschwenkbare Montage der beiden Radträger an den jeweiligen Längslenkern und die jeweilige Vorgabe einer Schwenkachse zwischen Radträger und Längslenker durch die Radträgerlager kann in vorteilhafter Weise eine gewünschte Elastokinematik beim Einwirken von Kräften auf die Räder erreicht werden.

Bei einer vorteilhaften Ausgestaltung der erfindungsgemäßen Verbundlenkerhinterachse ist die Schwenkachse, um welche der Radträger relativ zum Längslenker verschwenkbar ist, so gerichtet, dass sie, in Vorwärtsfahrtrichtung betrachtet, eine Aufstandsebene des Rads hinter einer Radaufstandslinie passiert. Wenn in diesem Fall eine Seitenkraft auf das Rad an dessen Radaufstandslinie einwirkt, so wird dem Rad über den hinter der Radaufstandslinie befindlichen Hebelarm, eine Untersteuerungsbewegung auferlegt, so dass in vorteilhafter Weise einer bei Kurvenfahrt auftretenden Übersteuerungsbewegung entgegengewirkt werden kann.

Bei einer vorteilhaften Ausgestaltung der erfindungsgemäßen Verbundlenkerhinterachse ist die Schwenkachse, um welche der Radträger relativ zum Längslenker verschwenkbar ist, so gerichtet, dass sie, in Vorwärtsfahrtrichtung betrachtet, eine Aufstandsebene des Rads vor einer Radaufstandslinie passiert, um auf diese Weise ein gewünschtes elastokinematisches Verhalten zu realisieren.

In herkömmlichen Verbundlenkerhinterachsen, bei denen der Radträger schwenkbar gegenüber dem Längsträger angeordnet und mittels eines Aktuators betätigbar ist, ist die Schwenkachse, um welche der Radträger relativ zum Längslenker verschwenkbar ist, gewöhnlicher Weise so gerichtet, dass sie eine Aufstandsebene des Rads fahrzeugaussenseitig (d. h. auf der der Fahrzeugmitte abgewandten Seite) einer (das Rad radial teilenden) Radmittenebene passiert. Bei einer weiteren vorteilhaften Ausgestaltung der erfindungsgemäßen Verbundlenkerhinterachse ist die Schwenkachse, um welche der Radträger relativ zum Längslenker verschwenkbar ist, so gerichtet, dass sie eine Aufstandsebene des Rads fahrzeugaussenseitig einer Radmittenebene passiert, um auf diese Weise ein gewünschtes elastokinematisches Verhalten zu realisieren.

In der erfindungsgemäßen Verbundlenkerhinterachse kann durch die elastokinematischen Eigenschaften der elastischen Radträgerlager auch bei anderen Durchstosspunkten durch die Aufstandsebene des Rads ein vorteilhaftes elastokinematisches Verhalten der Verbundlenkerhinterachse erzielt werden, durch das einer Übersteuerungsbewegung bei Kurvenfahrt entgegengewirkt werden kann. Insbesondere ist bei einer weiteren vorteilhaften Ausgestaltung der erfindungsgemäßen Verbundlenkerhinterachse die Schwenkachse, um welche der Radträger relativ zum Längslenker verschwenkbar ist, so gerichtet, dass sie eine Aufstandsebene des Rads fahrzeugmittenseitig einer Radmittenebene passiert, um auf diese Weise ein gewünschtes elastokinematisches Verhalten zu realisieren.

Generell kann durch die Anordnung und Auslegung der elastischen Radträgerlager der erfindungsgemäßen Verbundlenkerhinterachse ein gewünschtes elastokinematisches Verhalten beim Einwirken von Kräften auf das Rad bzw. die Radträger erreicht werden.

Bei einer vorteilhaften Ausgestaltung der erfindungsgemäßen Verbundlenkerhinterachse sind die wenigstens zwei hinter der Radmittenachse angeordneten elastischen Radträgerlager in Form von elastischen (beispielsweise zylindrischen) Dämpfungsbuchsen ausgebildet, wobei die Dämpfungsbuchsen mit ihren Buchsenachsen in etwa jeweils in Fahrzeuglängsrichtung angeordnet sind. Hierdurch können in Fahrzeuglängsrichtung auf die Verbundlenkerhinterachse einwirkende Kräfte besonders effektiv durch die elastischen Dämpfungsbuchsen aufgenommen werden, wodurch der Fahrkomfort und das Handling des Fahrzeugs erheblich verbessert werden. Im Unterschied hierzu wäre bei einer herkömmlichen Verbundlenkerhinterachse für diesen Zweck eine "weichere" Auslegung der jeweiligen vorderen Anlenkung der Längslenker notwendig, was jedoch stets mit einer Zunahme der Übersteuerungsneigung einhergeht.

Insbesondere in obigem Fall kann es weiterhin von Vorteil sein, wenn das wenigstens eine vor der Radmittenachse angeordnete elastische Radträgerlager in Form einer elastischen Dämpfungsbuchsen ausgebildet ist, die mit ihrer Buchsenachse parallel oder schräg zur Fahrzeugquerrichtung angeordnet ist, um auf das Rad bzw. den Radträger einwirkende Seitenkräfte besonders effektiv aufnehmen zu können.

Bei einer weiteren vorteilhaften Ausgestaltung der erfindungsgemäßen Verbundlenkerhinterachse ist für jeden Radträger wenigstens ein Federmittel angeordnet, das so am Radträger angreift, dass über seine Steifigkeit eine gewünschte Auslenkung des Radträgers relativ zum Längslenker bewirkt wird, um auf diese Weise einen gewünschten Vorspurwinkel einzustellen.

Bei einer weiteren vorteilhaften Ausgestaltung der erfindungsgemäßen Verbundlenkerhinterachse ist für jeden Radträger ein zum Verschwenken des Radträgers um seine Schwenkachse relativ zum Längslenker geeignet angeordnetes elektrisches und/oder hydraulisches und/oder pneumatisches Betätigungsmittel (Aktuator) angeordnet. Hierbei kann es sich beispielsweise um einen hydraulischen Stellzylinder handeln. Zur Steuerung des Aktuators ist eine Steuer- und Regelvorrichtung vorgesehen. Besonders vorteilhaft ist ein am Radträger angreifender Aktuator, durch welchen der Radträger relativ zum Längslenker verschwenkt werden kann, am Längslenker angebracht. Insofern kann in vorteilhafter Weise eine integrierte Anordnung des Aktuators in der Verbundlenkerhinterachse erreicht werden.

Ist ein Aktuator zum Verschwenken des Radträgers relativ zum Längslenker vorgesehen, dann ist die erfindungsgemäße Verbundlenkerhinterachse vorteilhaft so ausgebildet, dass die Schwenkachse, um welche der Radträger relativ zum Längslenker elastisch verschwenkbar ist, so gerichtet ist, dass sie in naher Umgebung der Aufstandslinie des Rads durch die Aufstandsebene des Rads hindurch verläuft oder alternativ die Aufstandslinie kreuzt, so dass eine Krafteinwirkung auf den Radträger und demzufolge auf den an diesem angreifenden Aktuator durch die bei einer Kurvenfahrt des Fahrzeugs auftretenden und auf das Rad einwirkenden Seitenkräfte minimiert oder vermieden wird.

Die Erfindung erstreckt sich ferner auf ein Fahrzeug, insbesondere Kraftfahrzeug, mit einer wie oben beschriebenen erfindungsgemäßen Verbundlenkerhinterachse.

### Ausführungsbeispiel

Die Erfindung wird nun anhand eines Ausführungsbeispiels näher erläutert, wobei Bezug auf die beigefügte Zeichnung genommen wird. Es zeigt:

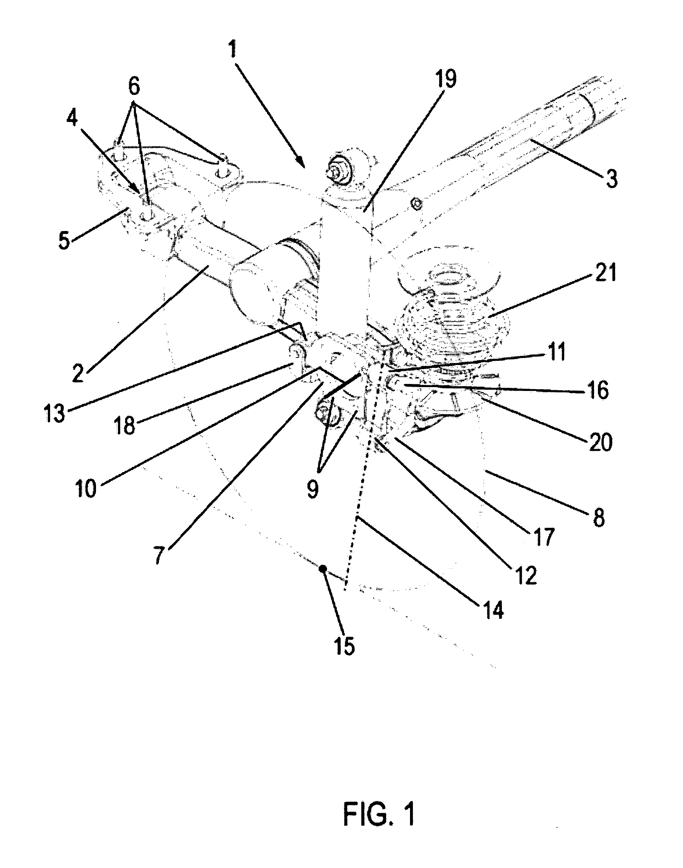

- Fig. 1: in einer schematischen perspektivischen Darstellung den grundlegenden Aufbau eines Ausführungsbeispiels der erfindungsgemäßen Verbundlenkerhinterachse.

In Figur 1 ist in einer schematischen Darstellung ein Ausführungsbeispiel der insgesamt mit der Bezugszahl 1 bezeichneten, erfindungsgemäßen Verbundlenkerhinterachse eines Kraftfahrzeugs dargestellt. In Fig. 1 ist zum Zwecke einer einfacheren Darstellung lediglich ein das linke Hinterrad tragender Achsabschnitt der Verbundlenkerhinterachse 1 dargestellt. Die Verbundlenkerhinterachse ist in entsprechender Weise mit einem das rechte Hinterrad tragenden Achsabschnitt, der symmetrisch zu dem das linke Hinterrad tragenden Achsabschnitt ausgebildet ist, versehen.

Demnach umfasst die Verbundlenkerhinterachse 1 zwei im Wesentlichen in Fahrzeuglängsrichtung sich erstreckende, starre Längslenker 2, die über eine im Wesentlichen in Fahrzeugquerrichtung sich erstreckende, biegesteife, jedoch torsionsweiche Querstrebe 3 miteinander verbunden sind. Die Querstrebe 3, welche beispielsweise durch Verschweißen mit den Längslenkern 2 verbunden ist, wirkt als Stabilisator beim gegengleichen Ein- und Ausfedern der beiden von der Verbundlenkerhinterachse 1 getragenen Räder.

Jeder Längslenker 2 ist an seinem frontseitigen Ende über eine elastische Längslenker-Dämpfungsbuchse 4 an der Fahrzeugkarosserie oder an einem an der Fahrzeugkarosserie befestigten Fahrschemel montiert. Die Längslenker-Dämpfungsbuchse 4 ist in ein vom frontseitigen Ende des Längslenkers 2 geformtes Lagerauge, das in Fig. 1 nicht näher dargestellt ist, eingesetzt.

Die Längslenker-Dämpfungsbuchse 4 umfasst einen im Wesentlichen zylindrischen äußeren Buchsenmantel, der von dem Lagerauge umgriffen wird, und einen hierzu koaxial angeordneten, inneren Anlaufkörper 5, zwischen denen ein beispielsweise aus Gummi bestehender Dämpfungskörper angeordnet ist. Zur Befestigung des Längslenkers 2 an der Karosserie bzw. Fahrschemel ist der Buchsenmantel beispielsweise durch Einpressen fest mit dem Lagerauge verbunden und der Anlaufkörper über Schraubbolzen 6 mit der Karosserie bzw. dem Fahrschemel fest verschraubt. Die Längslenker-Dämpfungsbuchse 4 ist mit ihrer Achsenrichtung (Zylinderachse des Buchsenmantels) quer zur Fahrzeuglängsrichtung gerichtet, so dass der Längslenker 2 um eine quer zur Fahrzeuglängsrichtung orientierte Schwenkachse elastisch verschwenkbar ist. Gleichermaßen wäre es auch möglich, die Längslenker-Dämpfungsbuchse 4 mit ihrer Achsenrichtung (Zylinderachse des Buchsenmantels) schräg zur Fahrzeuglängsrichtung anzuordnen.

Jeder Längslenker 2 ist an seinem heckseitigen Ende mit einem Radträger 7 versehen, an dem über nicht näher dargestellte Befestigungsschrauben in Schraubenbohrungen 9 ein Rad 8 um eine Radmittenachse 10 drehbar gelagert ist. Jeder Radträger 7 ist über drei elastische Lagerbuchsen, welche hier beispielsweise in Form von zylindrischen Radträger-Dämpfungsbuchsen ausgebildet sind, mit dem zugehörigen Längslenker 2 verbunden.

Jede Radträger-Dämpfungsbuchse 11, 12, 13 umfasst einen äußeren zylindrischen Buchsenmantel und einen hierzu koaxialen inneren zylindrischen Anlaufkörper, zwischen denen ein beispielsweise aus Gummi bestehender Dämpfungskörper angeordnet ist. Eine erste Radträger-Dämpfungsbuchse 11 und eine zweite Radträger-Dämpfungsbuchse 12 sind, in normaler Vorwärtsfahrtrichtung des Fahrzeugs betrachtet, hinter der Radmittenachse 10 des Rads 8 angeordnet, während eine dritte Radträger-Dämpfungsbuchse 13 vor der Radmittenachse 10 des Rads 8 angeordnet ist.

Die beiden hinter der Radmittenachse 10 angeordneten Radträger-Dämpfungsbuchsen 11, 12, die mit einem wählbaren Abstand in etwa vertikal über-/untereinander angeordnet sind, sind mit ihren Achsenrichtungen in etwa parallel zur Fahrzeuglängsrichtung angeordnet und definieren durch ihre Elastizität und Anordnung gemeinsam eine Schwenkachse 14, um welche der Radträger 7 relativ zum Längslenker 2 verschwenkt werden kann. Wie in Fig. 1 erkennbar, ist die Schwenkachse 14 so gerichtet, dass sie, in normaler Vorwärtsfahrtrichtung des Fahrzeugs betrachtet, eine Aufstandsebene des Rads 8 hinter einem Radaufstandspunkt 15, welcher Teil einer quer zur Fahrzeuglängsrichtung sich erstreckenden Radaufstandslinie ist, passiert. Gleichermaßen wäre es jedoch auch möglich, dass die beiden hinter der Radmittenachse 10 angeordneten Radträger-Dämpfungsbuchsen 11, 12 mit ihren Achsenrichtungen schräg zur Fahrzeuglängsrichtung angeordnet sind.

Die vor der Radmittenachse 10 angeordnete dritte Radträger-Dämpfungsbuchse 13 ist mit ihrer Achsenrichtung in etwa quer zur Fahrzeuglängsrichtung angeordnet, um auf diese Weise bei Kurvenfahrt auftretende Seitenkräfte besonders effektiv in die gewünschte elastokinematischen Eigenschaften umzusetzen. Gleichermaßen wäre es jedoch auch möglich, dass die vor der Radmittenachse 10 angeordnete dritte Radträger-Dämpfungsbuchse 13 mit ihrer Achsenrichtungen schräg zur Fahrzeugquerrichtung angeordnet ist. Bei entsprechenden elastischen Eigenschaften kann die dritte Radträger-Dämpfungsbuchse 13 auch in etwa in Fahrzeuglängsrichtung angeordnet sein.

Die beiden hinter der Radmittenachse 10 angeordneten Radträger-Dämpfungsbuchsen 11, 12 sind über jeweilige Lagergabeln 16, 17, die am Längslenker 2 angeformt sind, nämlich eine erste Lagergabel 16 für die erste Radträger-Dämpfungsbuchse 11 und eine zweite Lagergabel 17 für die zweite Radträger-Dämpfungsbuchse 12, mit dem Längslenker 2 starr verbunden. Ebenso ist die vor der Radmittenachse 10 angeordnete dritte Radträger-Dämpfungsbuchse 13 über eine an den Längslenker 2 angeformte dritte Lagergabel 18 mit dem Längslenker 2 starr verbunden. Hierbei ist der äußere Buchsenmantel der Dämpfungsbuchsen jeweils mit dem Radträger beispielsweise durch Einpressen starr verbunden und die Lagergabeln greifen jeweils am inneren Anlaufkörper der Radträger-Dämpfungsbuchsen an. Gleichermaßen wäre es auch möglich, dass die Lagergabeln jeweils mit dem äußeren Buchsenmantel starr verbunden sind, während der Radträger an den inneren Anlaufkörpern der Radlager-Dämpfungsbuchsen angreift. In Fig. 1 ist eine lediglich beispielhafte Lagerung für die Radträger-Dämpfungsbuchsen gezeigt. Jede andere geeignete Lagerung für die Radträger-Dämpfungsbuchsen kann eingesetzt werden.

Die Verbundlenkerhinterachse 1 umfasst weiterhin einen dem Längslenker 2 aufsitzenden Stoßdämpfer 19, sowie eine sich auf einem Federteller 21 des Längslenkers 2 abstützende Achsfeder 21.

Durch die Fig. 1 gezeigte Verbundlenkerhinterachse 1 kann in vorteilhafter Weise einer bei Kurvenfahrt auftretenden Übersteuerungsbewegung entgegen gewirkt werden, da eine bei Kurvenfahrt am Radaufstandspunkt 15 zur Fahrzeugmitte hin auf das Rad 8 einwirkende Seitenkraft, das Rad 8 bzw. den Radträger 7 im Sinne einer Untersteuerungsbewegung um die Schwenkachse 14 verschwenkt. Eine Aufnahme der Seitenkraft kann insbesondere durch eine geeignete Anordnung der dritten Radträger-Dämpfungsbuchse 13 erreicht werden. Zudem wird durch die Radträger-Dämpfungsbuchsen 11-13 vorteilhaft eine erhöhte Längsnachgiebigkeit erreicht, die in Verbindung mit der Längslenker-Dämpfungsbuchse 4 zu einer erheblichen Komfortverbesserung führt.

Nicht dargestellt in Fig. 1 ist ein lediglich optional vorzusehender Aktuator, durch den der Radträger 7 relativ zum Längslenker 2 um die Schwenkachse 14 verschwenkt werden kann. Anstelle des Aktuators könnte ein Federmittel angeordnet sein, das so am Radträger angreift, dass über seine Steifigkeit eine gewünschte Verschwenkung des Radträger herbeigeführt und hierdurch ein gewünschter Vorspurwinkel eingestellt wird.

### Bezugszeichenliste

1 Verbundlenkerhinterachse
2 Längslenker
3 Querstrebe
4 Längslenker-Dämpfungsbuchse
5 Anlaufkörper
6 Schraubenbolzen
7 Radträger
8 Rad
9 Schraubenbohrung
10 Radmittenachse
11 erste Radträger-Dämpfungsbuchse
12 zweite Radträger-Dämpfungsbuchse
13 dritte Radträger-Dämpfungsbuchse
14 Schwenkachse
15 Radaufstandspunkt
16 erste Lagergabel
17 zweite Lagergabel
18 dritte Lagergabel
19 Stoßdämpfer
20 Federteller
21 Achsfeder

## Patentansprüche

1. Verbundlenkerhinterachse (1) eines Fahrzeugs, insbesondere Kraftfahrzeugs, mit zwei starren Längslenkern (2), die jeweils mit ihrem einen Ende schwenkbar an einer Fahrzeugkarosserie gelagert sind und an deren anderem Ende jeweils ein Radträger (7) zur drehbaren Lagerung eines Fahrzeugrads (8) um seine Radmittenachse (10) angebracht ist, sowie mit einer die beiden Längslenker (2) miteinander verbindenden torsionsweichen Querstrebe (3), **dadurch gekennzeichnet, dass** jeder Radträger (7) mittels wenigstens dreier elastischer Radträgerlager (11, 12, 13) am Längslenker (2) angebracht ist, wobei, in Vorwärtsfahrtrichtung des Fahrzeugs betrachtet, wenigstens zwei Radträgerlager (11, 12) hinter der Radmittenachse (10) und wenigstens ein Radträgerlager (13) vor der Radmittenachse (10) angeordnet sind, derart, dass durch die beiden hinter der Radmittenachse (10) angeordneten Radträgerlager (11, 12) eine Schwenkachse (14) zum Verschwenken des Radträgers (7) relativ zum Längslenker (2) vorgegeben ist.

2. Verbundlenkerhinterachse nach Anspruch 1, **dadurch gekennzeichnet, dass** die Schwenkachse (14), um welche der Radträger (7) relativ zum Längslenker (2) verschwenkbar ist, so gerichtet ist, dass sie eine Aufstandsebene des Rads hinter einer Radaufstandslinie passiert.

3. Verbundlenkerhinterachse nach Anspruch 1, **dadurch gekennzeichnet, dass** die Schwenkachse (14), um welche der Radträger (7) relativ zum Längslenker (2) verschwenkbar ist, so gerichtet ist, dass sie eine Aufstandsebene des Rads vor einer Radaufstandslinie passiert.

4. Verbundlenkerhinterachse nach Anspruch 2 oder 3, **dadurch gekennzeichnet, dass** die Schwenkachse (14), um welche der Radträger (7) relativ zum Längslenker (2) verschwenkbar ist, so gerichtet ist, dass sie eine Aufstandsebene des Rads fahrzeugaussenseitig einer Radmittenebene passiert.

5. Verbundlenkerhinterachse nach Anspruch 2 oder 3, **dadurch gekennzeichnet, dass** die Schwenkachse (14), um welche der Radträger (7) relativ zum Längslenker (2) verschwenkbar ist, so gerichtet ist, dass sie eine Aufstandsebene des Rads fahrzeugmittenseitig einer Radmittenebene passiert.

6. Verbundlenkerhinterachse nach einem der vorhergehenden Ansprüche 1 bis 5, **dadurch gekennzeichnet, dass** die wenigstens zwei hinter der Radmittenachse (10) angeordneten elastischen Radträgerlager in Form elastischer Dämpfungsbuchsen (11, 12) ausgebildet sind, wobei die Dämpfungsbuchsen mit ihren Buchsenachsen jeweils in etwa in Fahrzeuglängsrichtung angeordnet sind.

7. Verbundlenkerhinterachse nach einem der vorhergehenden Ansprüche 1 bis 6, **dadurch gekennzeichnet, dass** das wenigstens eine vor der Radmittenachse (10) angeordnete elastische Radträgerlager in Form einer elastischen Dämpfungsbuchse (13) ausgebildet ist, wobei die Dämpfungsbuchsen mit ihre Buchsenachse in etwa in Fahrzeugquerrichtung angeordnet ist.

8. Verbundlenkerhinterachse nach einem der vorhergehenden Ansprüche 1 bis 7, **dadurch gekennzeichnet, dass** für jeden Radträger wenigstens ein Federmittel angeordnet ist, das so am Radlager angreift, dass über seine Steifigkeit eine gewünschte Auslenkung des Radträgers relativ zum Längslenker bewirkt wird.

9. Verbundlenkerhinterachse nach einem der vorhergehenden Ansprüche 1 bis 7, **dadurch gekennzeichnet, dass** für jeden Radträger ein zum Verschwenken des Radträgers um seine Schwenkachse relativ zum Längslenker geeignetes elektrisches und/oder hydraulisches und/oder pneumatisches Betätigungsmittel angeordnet ist.

10. Fahrzeug, insbesondere Kraftfahrzeug, mit einer Verbundlenkerhinterachse nach einem der vorhergehenden Ansprüche 1 bis 9.
